# EUROPEAN PATENT APPLICATION

(11) **EP 3 783 877 A1**
(43) Date of publication of application: **24.02.2021**
(21) Application number: 19788867.0
(22) Date of filing: 12.04.2019
(51) Int. Cl.: H04N 5/225

(54) **PHOTOGRAPHING MODULE HAVING CHAMFER, LIGHT-SENSING ASSEMBLY, AND ELECTRONIC DEVICE**

(30) Priority: 17.04.2018 CN 201820548613 U; 17.04.2018 CN 201810342446
(71) Applicant: Ningbo Sunny Opotech Co., Ltd., Ningbo, Zhejiang 315400 (CN)
(72) Inventor: ZHAO, Bojie, Ningbo, Zhejiang 315400 (CN); YUAN, Dongli, Ningbo, Zhejiang 315400 (CN); HUANG, Zhen, Ningbo, Zhejiang 315400 (CN)
(74) Representative: Office Freylinger
(86) International application number: PCT/CN2019/082417
(87) International publication number: WO 2019/201166

(57) **Abstract**

A camera module with chamfer, a photosensitive component and an electronic device are provided. The camera module includes at least one chamfer portion suitable for being installed at a corner of the electronic device frame; an optical lens; and a photosensitive component, wherein the photosensitive component has a second chamfer portion, wherein the second chamfer portion is for forming the chamfer portion, wherein the photosensitive component includes a photosensitive element, a circuit board and a lens holder, wherein the photosensitive element is electrically connected to the circuit board, and the lens holder supports the optical lens in the photosensitive path of the photosensitive element, wherein the lens holder has a light window arranged on a photosensitive path of the photosensitive element, so that the camera module is suitable for being installed in a corner of a frame of the electronic device, which increases the screen-to-body ratio.

## Description

### TECHNICAL FIELD

The present invention relates to field of camera modules, and in particular to a camera module with chamfer, a photosensitive component and an electronic device, wherein the chamfer structure adapts to shape of a corner of the electronic device, so as to be installed at the corner of the electronic device to improve the screen-to-body ratio.

### BACKGROUND

In recent years, with the popularization and rapid development of smart devices, especially with the advent of today's era of full-screen mobile phones, the requirements for the screen-to-body ratio of a display of an electronic device are becoming higher and higher. Correspondingly, the camera modules have to adapt to the development, and increasingly require lighter, thinner, and miniaturized, so that even more miniaturized camera modules and more near edge arrangement are used to make room for the display and increase the screen-to-body ratio, especially a front camera of electronic devices such as mobile phones will take up part of the screen space. Therefore, in order to meet the demand for full screens, the camera module needs to be further miniaturized, and the camera module manufacturer continues to devote themselves to designing and manufacturing the camera module that meets these requirements.

At present, a commonly used method is to arrange the camera module in center of the electronic device and close to an upper edge of a mobile phone, thereby increasing the screen-to-body ratio of the mobile phone. Or just leave a part of module area in the center of the screen of the mobile phone, which is now called "flush bangs." Although this increases the screen-to-body ratio, the user's visual experience is not good; the reason is that the module area is a black area, while the display area is a colored area; after the user lights up the screen, there is always a black area; the area is in the very center, which is hard to ignore.

Therefore, it is necessary to propose a new design scheme to provide users with a better visual experience while meeting the requirements of full screen, and not to give people a sense of abruptness like bang screen.

### SUMMARY OF THE INVENTION

An object of the present invention is to provide a camera module with chamfer, a photosensitive component and an electronic device, wherein the camera module is suitable for being installed at a corner of a frame of the electronic device such as a mobile phone and a tablet.

Another object of the present invention is to provide a camera module with chamfer, a photosensitive component and an electronic device, wherein a chamfer portion of the camera module is adapted to a shape of the corner of the frame of the electronic device such as the mobile phone, so that the camera module is more suitable to be installed in the corner of the electronic device, and can be closer to the corner of the mobile phone than a traditional square camera module, thereby improving screen-to-body ratio and giving user a better user experience.

Another object of the present invention is to provide a camera module with chamfer, a photosensitive component and an electronic device, wherein the chamfer portion is implemented as a rounded chamfer so as to be fitted to a round corner design of four corners of most existing electronic device frames, thereby meeting the market demands.

Another object of the present invention is to provide a camera module with chamfer, a photosensitive component and an electronic device, wherein the chamfer portion can be designed to have a shape such as an inclined edge, so as to adapt to different corner shapes of the electronic device frame.

Another object of the present invention is to provide a camera module with chamfer, a photosensitive component and an electronic device, wherein the camera module has a plurality of chamfer portions to increase the screen-to-body ratio.

Another object of the present invention is to provide a camera module with chamfer, a photosensitive component and an electronic device, wherein the camera module has two rounded chamfer portions, which are diagonally arranged on the camera module diagonally, so that a docking corner of the screen of the electronic device and the camera module is rounded, which increases area of the screen and increases the screen-to-body ratio.

Another object of the present invention is to provide a camera module with chamfer, a photosensitive component and an electronic device, wherein an outer edge of an optical lens without chamfer is located inside the chamfer of an outer edge of a lens holder, so that the optical lens does not require additional chamfering process, thereby saving process steps.

Another object of the present invention is to provide a camera module with chamfer, a photosensitive component and an electronic device, wherein a first chamfer portion is provided at the corner of the photosensitive component to adapt to the shape of the corner of the electronic device.

Another object of the present invention is to provide a camera module with chamfer, a photosensitive component and an electronic device, wherein the outer edge of the optical lens without chamfer is located outside the chamfer of the outer edge of the lens holder, so that the optical lens needs to be chamfered to form a second chamfered portion.

Another object of the present invention is to provide a camera module, a photosensitive component and an electronic device with chamfering, wherein the second chamfered portion of the optical lens and the first chamfered portion of the photosensitive component are arranged at the same position to form the chamfered portion.

Another object of the present invention is to provide a camera module with chamfer, a photosensitive component and an electronic device, wherein electronic elements of the camera module are arranged on an edge area different from the chamfered area, thereby facilitating the photosensitive component to form the first chamfer portion.

Another object of the present invention is to provide a camera module with chamfer, a photosensitive component and an electronic device, wherein in order to increase the screen-to-body ratio, the optical lens is abuts on a top side wall of the electronic device, and the photosensitive element is attached to the circuit board in an upward direction.

Another object of the present invention is to provide a camera module with chamfer, a photosensitive component and an electronic device, wherein the electronic elements are arranged on one side area and/or a corner edge area of the photosensitive component, so that the photosensitive elements can be attached to the circuit board in an upward direction, that is, the top area of the circuit board will be narrower than other areas.

Another object of the present invention is to provide a camera module with chamfer, a photosensitive component and an electronic device, wherein the second chamfer portion and the first chamfer portion correspond to the shape and the position of the corner of the electronic device frame, the camera module is closer to the edge of the electronic device than the existing camera module, and the screen-to-body ratio is higher.

Another object of the present invention is to provide a camera module with chamfer, a photosensitive component and an electronic device, wherein two adjacent edges of the second chamfer portion are implemented as straight edges, so as to be as close as possible to adjacent side walls at the corners of the electronic device frame, increasing the screen-to-body ratio.

Another object of the present invention is to provide a camera module with chamfer, a photosensitive component and an electronic device, wherein the electronic elements are arranged in the corner area, so that the photosensitive element can be attached to the circuit board in a right and upward direction, that is, a top area and a side area of the circuit board are narrower than other areas at this time.

Another object of the present invention is to provide a camera module with chamfer, a photosensitive component and an electronic device, wherein a molded lens holder surrounds peripheral side of a light-transmitting element so that the light-transmitting element is arranged on a light window, so as to reduce the area of the light-transmitting element, avoid it from being damaged, and at the same time reduce an overall height of the camera module to meet the current demand for miniaturization of the camera module.

Another object of the present invention is to provide a camera module with chamfer, a photosensitive component and an electronic device, wherein a circuit board chamfer with a chamfer portion can be formed before installing the lens holder, or it can be formed after installing the lens holder and before installing the optical lens, or it may be formed after installing the optical lens.

Another object of the present invention is to provide a camera module with chamfer, a photosensitive component and an electronic device, wherein the circuit board chamfer can be formed by suitable processes such as punching, cutting or laser cutting, the appropriate forming process can be selected for the situation by the manufacturer.

Another object of the present invention is to provide a camera module with chamfer, a photosensitive component and an electronic device, wherein the chamfer portion is correspondingly assembled and formed by the circuit board chamfer, a lens holder chamfer of the lens holder and a second chamfer portion of the optical lens, or it may be integrally formed by grinding or cutting after the camera module is assembled.

Another object of the present invention is to provide a camera module with chamfer, a photosensitive component and an electronic device, wherein the lens holder chamfer is formed by injection molding without cutting or grinding, which reduces overall grinding or cutting difficulty of the camera module.

Another object of the present invention is to provide a camera module with chamfer, a photosensitive component and an electronic device, wherein the manufacturer can use a existing mold to produce the photosensitive component, and then form the chamfer after cutting or the like, so as to reduce the cost of reproducing the mold.

According to one aspect of the present invention, the present invention provides a camera module with chamfer suitable for an electronic device, including:
at least one chamfer portion, suitable for being installed at a corner of a frame of the electronic device;
an optical lens; and
a photosensitive component, wherein the photosensitive component has a first chamfer portion, wherein the first chamfer portion is for forming the chamfer portion, wherein the photosensitive component includes a photosensitive element, a circuit board and a lens holder, wherein the photosensitive element is electrically connected to the circuit board, the lens holder supports the optical lens in a photosensitive path of the photosensitive element, wherein the lens holder has a light window that provides the photosensitive element with a light path.

In an embodiment of the present invention, the circuit board and the lens holder correspondingly have a circuit board chamfer and a lens holder chamfer, wherein the circuit board chamfer and the lens holder chamfer are arranged at corresponding positions, wherein the circuit board chamfer and the lens holder chamfer form the first chamfer portion.

In an embodiment of the present invention, the chamfer portion is implemented as a round chamfer, wherein the first chamfer portion is correspondingly implemented as a round chamfer.

In an embodiment of the present invention, the camera module has two round chamfer portions, wherein the round chamfer portions are diagonally arranged at two opposite corners of the camera module.

In an embodiment of the present invention, the circuit board is preset with a pre-cut edge for forming the first chamfer portion.

In an embodiment of the present invention, the photosensitive component further includes a light-transmitting element, wherein the lens holder includes a supporting portion, and top of the supporting portion extends from periphery to center to define the light window, and supports the light-transmitting element in the photosensitive path of the photosensitive element.

In an embodiment of the present invention, the supporting portion encapsulates peripheral sides of the light-transmitting element.

In an embodiment of the present invention, the photosensitive component further has at least one electronic element, wherein the electronic element is attached to the circuit board and is electrically connected to the circuit board.

In an embodiment of the present invention, the circuit board further has an electrical connection area, wherein the lens holder and the photosensitive element define the electrical connection area, wherein the electrical connection area has a chamfer area and an edge area, wherein the chamfer area and the edge area constitute the electrical connection area, and the electronic elements are arranged in the edge area.

In an embodiment of the present invention, the edge area has a top area, a side area, and a corner area, wherein the optical lens abuts on a top side wall of the electronic device, wherein width of the top area is narrower than width of the side area and the corner area, wherein the electronic elements are installed in the side area and/or the corner area.

In an embodiment of the present invention, the optical lens has a second chamfer portion, wherein the first chamfer portion corresponds to the second chamfer portion and for forming the chamfer portion.

In an embodiment of the present invention, the edge area has a top area, a side area and a corner area, wherein the second chamfer portion abuts on two side walls of the corner of the electronic device, wherein width of the top area and the side area is narrower than width of the corner area, and the electronic elements are installed in the corner area.

In an embodiment of the present invention, two adjacent edges of the second chamfer portion are implemented as straight edges, so that the second chamfer portion adheres to the two side walls of the corner of the electronic device.

In an embodiment of the present invention, one of the two adjacent edges of the second chamfer portion is implemented as a straight edge for making the first chamfer portion adhere to the corner side wall of the electronic device.

According to another aspect of the present invention, the present invention further provides an electronic device, including:
a device body; and
a camera module with chamfer as described above, wherein the camera module is installed at a corner of the device body frame.

According to another aspect of the present invention, the present invention further provides a photosensitive component suitable for a camera module with chamfer, characterized in that it includes:
a photosensitive element;
a circuit board, wherein the photosensitive element electrically connects and adheres to the circuit board, and the circuit board has a circuit board chamfer; and
a lens holder, wherein the lens holder has a light window that provides the photosensitive element with a light path and a lens holder chamfer, wherein the lens holder chamfer and the circuit board chamfer correspondingly form a second chamfer structure suitable for forming the chamfer structure of the camera module, wherein the lens holder surrounds the photosensitive element, and is attached to the circuit board, and is suitable for supporting an optical lens of the camera module in a photosensitive path of the photosensitive element.

### Brief Description of the Drawings

Fig.1 is a structural diagram of an electronic device according to the present invention, to illustrate a schematic diagram of a structure that a conventional camera module is installed at a corner of a frame of the electronic device.
Fig.2 is a schematic structural diagram of an electronic device according to the present invention, to illustrate a schematic structural diagram of a structure that a camera module with chamfer according to the present invention is installed at a corner of a frame of the electronic device.
Fig.3 is a perspective view of a camera module according to a first preferred embodiment of the present invention.
Fig. 4 is a schematic structural diagram of the camera module according to the first preferred embodiment of the present invention.
Fig. 5 is a top view of the photosensitive component of an embodiment of the above-mentioned camera module according to the present invention.
Fig. 6 is a top view of a photosensitive component of another embodiment of a camera module according to the present invention.
Fig. 7 is a perspective view of a camera module according to a second embodiment of the invention.
Fig.8 is a schematic top view of the camera module according to the above-mentioned second embodiment of the present invention.
Fig.9 is a schematic structural diagram of the camera module according to the above-mentioned second embodiment of the present invention.
Fig. 10 is a top view of a photosensitive component of an embodiment of a camera module according to the present invention.

### DETAILED DESCRIPTION OF EMBODIMENTS

The following description is used to disclose the present invention so that those skilled in the art can implement the present invention. The preferred embodiments in the following description are only examples, and those skilled in the art can think of other obvious variations. The basic principles of the present invention defined in the following description can be applied to other embodiments, modifications, improvements, equivalents, and other technical solutions that do not depart from the spirit and scope of the present invention.

Those skilled in the art should understand that, in the disclosure of the present invention, the terms "longitudinal", "lateral", "upper", "lower", "front", "rear", "left", "right", "vertical", "horizontal", "top", "bottom", "inner", "outer", etc. are based on the orientation or positional relationship shown in the drawings, which is only for the convenience of describing the present invention and to simplify the description, rather than indicating or implying that the device or element referred to must have a specific orientation, be constructed and operated in a specific orientation, so the above terms should not be understood as limiting the present invention.

It can be understood that the term "a / an" should be understood as "at least one" or "one or more", that is, in one embodiment, the number of an element may be one, while in other embodiments, the number can be multiple, and the term "a / an" cannot be understood as a restriction on the number.

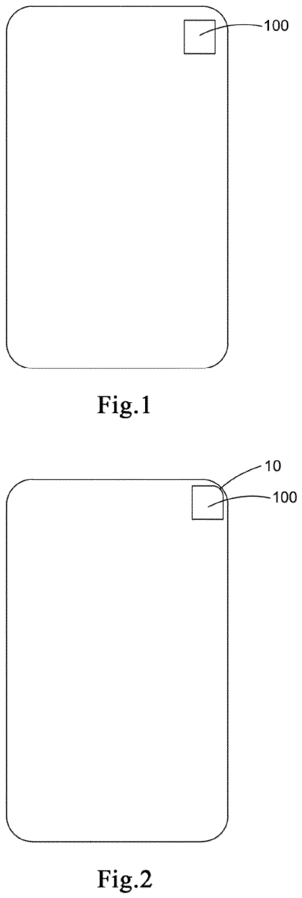

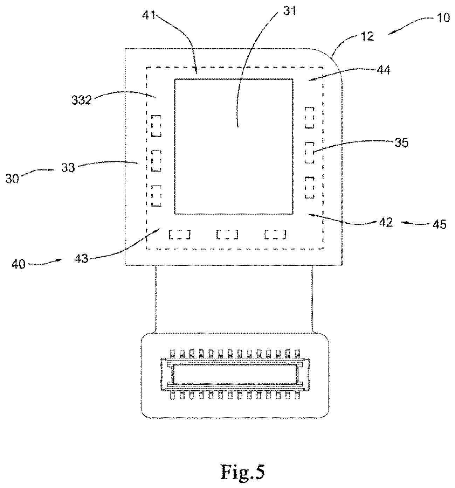

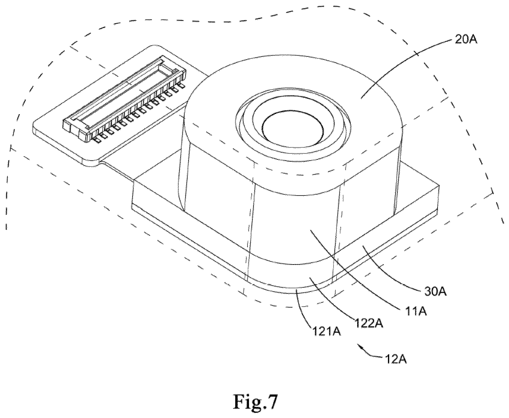

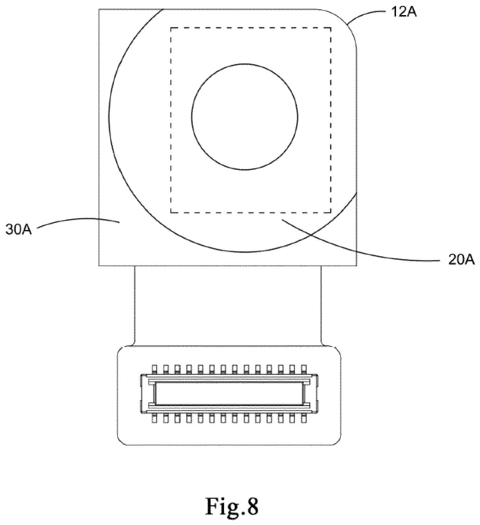

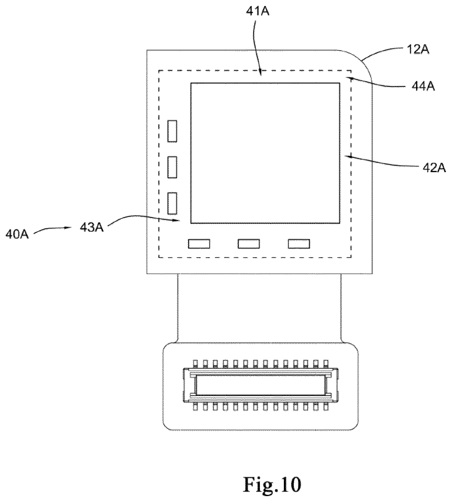

As shown in Figs. 1 to 10, the present invention provides a camera module 100 with chamfer and an electronic device, wherein the camera module 100 is installed at a corner of the electronic device to increase the screen-to-body ratio. Further, as shown in Fig. 1, in order to increase the aesthetics, increase cushioning effect of each vertex corner, and reduce possibility of sharp corners scratching the user, the corners of the existing electronic device are basically designed to be round. The structure of the existing camera module is square, when it is arranged at the corner of the electronic device, the shape of the camera module 100 does not match the shape at the corner, and there is still a large area of blank space, which cannot realize a high screen-to-body ratio.

Therefore, in the present invention, the camera module 100 has at least one chamfer portion 10, wherein the chamfer portion 10 is formed at the corner of the camera module 100 to fit the shape of the corner of the electronic device. Preferably, the shape and size of the chamfer portion 10 are adapted to the shape and size of the corner of the electronic device, so that the camera module is more suitable for being installed in the corner of the electronic device, compared to the traditional square camera module, it can be closer to the corner of the frame of the electronic device, thereby increasing the screen-to-body ratio while giving the user a better experience. The chamfer portion 10 is formed at the corner of the camera module 100. Preferably, as shown in Figs. 2 to 10, the chamfer portion 10 is designed to be a round chamfer, so as to conform to the shape of the corners of the frames of most existing electronic device. Of course, those skilled in the art can know that the shape of the chamfer portion 10 is not limited, and it can also be designed into other shapes to adapt to different shapes of the corners of the frame of the electronic device. For example, the chamfer portion 10 can be implemented as an inclined edge, so as to adapt to the prismatic corner of the electronic device.

In the present invention, the camera module 100 is installed in an upper right corner of the electronic device as an example for description, and it is not a limitation. Those skilled in the art should understand that the camera module 100 can also be installed in other corners such as an upper left corner of the electronic device to which the embodiments and features of the present invention are also applicable, and this will not be repeated here.

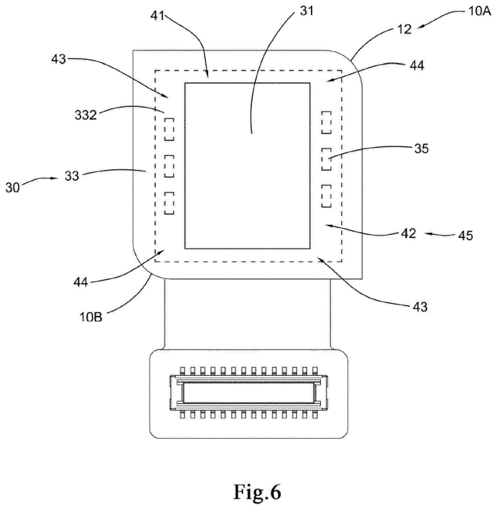

In an embodiment of the present invention, the camera module 100 may have a plurality of chamfer portions 10, so as to adapt to the demand that the camera module 100 is installed in different corners of the electronic device, and to a certain extent, it also reduces volume and size of the camera module 100. Optionally, the camera module 100 has two round chamfer portions 10A, 10B, wherein the chamfer portions 10A, 10B are diagonally arranged at two opposite corners of the camera module 100 respectively as shown in Fig. 6, a docking corners of a screen of the electronic device and the camera module 100 are round, so that the corners of the screen are smoothly transitioned to facilitate docking installation. On the other hand, this can increase the area of the screen and increase the screen-to-body ratio.

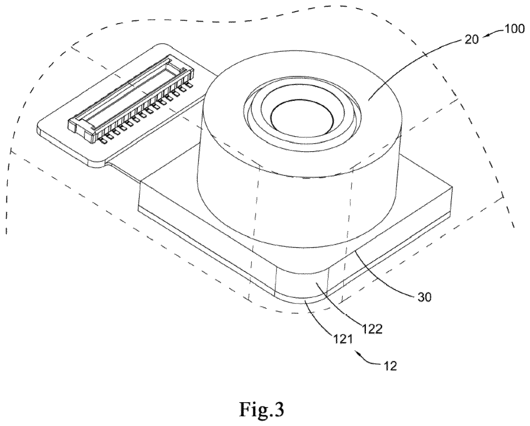

As shown in Figs. 3 to 5, in a first preferred embodiment of the present invention, the camera module 100 includes an optical lens 20 and a photosensitive component 30, wherein the optical lens 20 is fixed into a photosensitive path of the photosensitive component 30, so that the photosensitive component 30 receives image information and forms an image. It is understandable that the optical lens 20 can be implemented as an integrated optical lens, a split optical lens, a bare lens, or an optical lens including a lens barrel, etc., which is not limited by the present invention.

An outer edge of the optical lens 20 without chamfer is located inside an outer edge of the first chamfer portion 12, so the optical lens 20 does not need to be subjected to additional chamfering processing, thereby saving process steps. In order to realize the chamfer portion 10, the photosensitive component 30 has a first chamfer portion 12, wherein the first chamfer portion 12 is arranged at the corner of the photosensitive component 30 to adapt to the shape of the corner of the electronic device.

In particular, the optical lens 20 is implemented as a cylindrical shape, which is adapted to the round chamfered corners of electronic device. For example, when the camera module 100 is a fixed-focus module, the shape of the optical lens 20 is cylindrical, and its cross-sectional area is often smaller than the cross-sectional area of the lens holder, so it is not necessary to chamfer it.

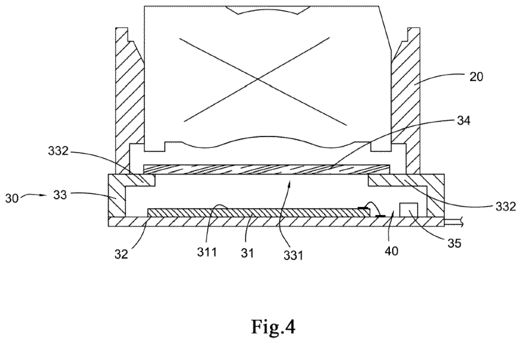

Specifically, as shown in Fig. 4, the photosensitive component 30 includes a photosensitive element 31, a circuit board 32, and a lens holder 33, wherein the photosensitive element 31 is electrically connected and attached to the circuit board 32, and the lens holder 33 is installed on the circuit board 32, and the lens holder 33 supports the optical lens 20 on a photosensitive path of the photosensitive element 31. The lens holder 33 has a light window 331 that provides a light path for the photosensitive element 31.

In the first embodiment, the chamfer portion 10 is implemented as the first chamfer portion 12 of the photosensitive component 30. When the camera module 100 is installed in the corner of the frame of the electronic device, the first chamfer portion 12 is as close as possible to an edge of the corner of the frame of the electronic device to increase the screen-to-body ratio. Correspondingly, the circuit board 32 and the lens holder 33 have a circuit board chamfer 121 and a lens holder chamfer 122 correspondingly, and they are correspondingly installed to form the first chamfer portion 12.

The circuit board chamfer 121 may be formed before the lens holder 33 is installed, or may be formed after the lens holder 33 is installed and before the optical lens 20 is installed, of course, it may also be formed after the optical lens 20 is installed, this process sequence does not affect the final structure of the present invention.

Specifically, in an embodiment of the present invention, the circuit board chamfer 121 is formed before the lens holder 33 is installed, so as to avoid dust generation in the subsequent cutting process. For example, in a process of cutting an outline of the circuit board, it is formed in a circuit board 32 without the circuit board chamfer 121 by cutting, punching, laser cutting and other processes. Generally, the production of small circuit boards is an imposition type production, which means that multiple circuit boards can be chamfered at one time in a contour cutting process, thereby improving production efficiency.

In another embodiment of the present invention, the circuit board chamfer 121 is formed after the lens holder 33 is installed, that is, after the lens holder 33 is installed, the circuit board 32 is cut along an edge of the lens holder 33 so as to form the circuit board chamfer 121, when the circuit board 32 is cut from a front side (a surface where the lens holder 33 is installed) of the circuit board 32, in order to avoid cutting the lens holder 33, an outer edge of the lens holder chamfer 122 is located inside an edge of the circuit board chamfer 121. When cutting the circuit board 32 from a back side of the circuit board 32, it is possible to avoid cutting the lens holder 33 by controlling the cutting depth. Therefore, the outer edge of the circuit board chamfer 121 is located inside the lens holder chamfer 122, so as to avoid interference between the bottom of the circuit board 32 and a housing of the electronic device when the camera module 100 is installed in the electronic device.

As shown in Fig. 4, the lens holder 33 can be implemented as a traditional lens holder, formed by an injection molding process, and then a light-transmitting element 34 is attached to a top surface of the lens holder 33. Those skilled in the art can understand the structure and concept of the traditional lens holder and the injection molding process of the lens holder, and these will not be repeated here.

Then, the lens holder chamfer 122 may be formed during injection molding by designing an injection shape. If an original mold is used, that is, when the shape of the mold is not changed, a non-chamfered lens holder 33 formed after injection is cut or ground or processed by other suitable processes to form the lens holder chamfer 122. Preferably, the chamfered structure 122 of the lens holder is integrally formed when the lens holder 33 is formed by injection molding, thereby reducing the difficulty of subsequent cutting, especially when the chamfered structure 121 of the circuit board is installed before the lens holder 33 is installed.

The lens holder chamfer 122 corresponds to the shape and size of the circuit board chamfer 121, so that the first chamfer portion 12 is formed by installing the two. When the first chamfer portion 12 is close to the corner of the frame of the electronic device, the adjacent edge and the opposite corner of the first chamfer portion 12 are suitable to be close to the side wall and the screen connected to the corner of the frame of the electronic device, so that the side wall of the electric device can be used as a bearing surface of the photosensitive component 30 to keep the camera module 100 stable.

In an embodiment of the present invention, the circuit board 32 is formed with a pre-cut edge by laser drilling and other processes, so as to facilitate the removal of excess material in the subsequent process to form the first chamfer portion 12. It is understandable that after installing or forming the lens holder 33, the manufacturer can chamfer the lens holder 33 and the circuit board 32 together according to the pre-cut edge.

The photosensitive component 30 further includes the light-transmitting element 34, wherein the light-transmitting element 34 is arranged in a light-sensing path of the photosensitive element 31 to filter light not needed for imaging. The light-transmitting element 34 may be an infrared filter, an ultraviolet filter, blue glass, or the like. It is understandable that the light-transmitting element 34 may also be a visible light color filter that filters out visible light, so as to be suitable for an infrared camera module that receives infrared light.

In the first preferred embodiment, top of the lens holder 33 extends from periphery to center to form a supporting portion 332, wherein the supporting portion 332 defines the light window 331. The light-transmitting element 34 is supported on a top surface of the lens holder 33.

That is to say, the top of the lens holder 33 extends from the periphery to the center, and the size of the formed light window 331 is equal to or slightly larger than the size of the photosensitive area 311, thereby reducing the required area of the light transmitting element 34 as much as possible, so as to be convenient for the lens holder 33 to form the lens holder chamfer 122.

Further, the lens holder 33 and the photosensitive element 31 define an electrical connection area 40 on the circuit board 32 to electrically connected install a series of electronic elements 35. That is, the electrical connection area 40 is arranged between an installation area of the lens holder 33 and an installation area of the photosensitive element 31, that is, the electrical connection area 40 is defined by an inner edge of the lens holder 33 and an edge of the photosensitive element 31.

The photosensitive component 30 includes the electronic element 35, and the electronic element 35 may be one or a combination of capacitors, resistors, inductors, diodes, and triodes. In this embodiment, the electronic element 35 is attached to the circuit board 32 and is electrically connected to the circuit board 32.

The electrical connection area 40 has a chamfer area 44 and an edge area 45, wherein the edge area 45 and the chamfer area 44 constitute the electrical connection area 40, that is, the remaining area of the edge area 45 by removing the chamfer area 44, wherein the chamfer area 44 is in contact with the inner edge of the chamfer portion 122 of the lens holder. In order to facilitate the chamfer formation, avoid the electronic elements 35 being affected during the formation of the lens holder chamfer 122 and the circuit board chamfer 121, and the electronic elements 35 are preferably installed on the edge area 45, especially when the chamfer portion 122 of the lens holder and the chamfer portion 121 of the circuit board are formed by cutting.

Furthermore, the edge area 45 is divided into a top area 41, a side area 42 and a corner area 43. The top area 41 is located on a top side of the photosensitive element 31. When the camera module 100 is installed in the upper right corner of the electronic device, as shown in Fig. 6, the side area 42 is implemented as a right electrical connection area, located on a right side of the photosensitive element 31. When the camera module 100 is installed in the upper left corner of the electronic device, the side area 42 is implemented as a left electrical connection area located on a left side of the photosensitive element 31.

Correspondingly, when the side area 42 is implemented as the right electrical connection area, the corner area 43 is located on the left side and bottom side of the photosensitive element 31. When the side area 42 is implemented as the left electrical connection area, the corner area 43 is located on the right side and bottom side of the photosensitive element 31. The photosensitive element 31 is mostly rectangular, here, an upper short edge is the top and a long edge is the side as an example for illustration, which is not a limitation.

In order to increase the screen-to-body ratio, the optical lens 20 is placed as close as possible to the top side wall of the electronic device, and even attached to the top side wall of the electronic device, accordingly, the photosensitive element 31 is attached to the circuit board 32 in an upward direction. That is, the top edge of the photosensitive element 31 is closer to a top inner edge of the lens holder 33, and the bottom edge is farther from a bottom inner edge of the lens holder 33. As a result, in this embodiment, the top area 41 has a narrower width relative to other areas (the width is a distance between the edge of the photosensitive element 31 and the inner edge of the lens holder 33), which is not advantageous for the attachment and installation of the electronic elements 35. Therefore, in this embodiment, the electronic elements 35 are preferably installed in the electrical connection side area 42 and/or the corner side area 43 of a wider side.

Of course, those skilled in the art can know that it is not necessary for the photosensitive element 31 to be attached to the circuit board 32 in an upward direction, and it is only a preferred embodiment here. Those skilled in the art can choose to arrange the photosensitive element 31 in the center, that is, not eccentrically, as shown in Fig. 6.

As shown in the figure, in a second embodiment of the present invention, a camera module 100A includes an optical lens 20A and a photosensitive component 30A, wherein the photosensitive component 30A includes a photosensitive element 31A, a circuit board 32A, a lens holder 33A, a light-transmitting element 34A and a series of electronic elements 35A. The photosensitive component 30A has a first chamfer portion 12A, the circuit board 32A has an electrical connection area 40A, wherein the electrical connection area 40A has a top area 41A, a side area 42A, a corner area 43A, and a chamfer area 44A. Correspondingly, the circuit board 32A has a circuit board chamfer 121A, and the lens holder 33A has a lens holder chamfer 122A.

Those skilled in the art can know that in the above first preferred embodiment, the order of forming round chamfer, multiple chamfer, and circuit board chamfer is not limited, and the process for forming the lens holder chamfer is not limited, the outer edge of the lens holder chamfer is located inside of the edge of the circuit board chamfer, and the installation of the electronic elements is preferentially installed in the top area, the side area, and the corner area, these features are also applicable in this embodiment and can be combined with this embodiment, these will not be repeated here.

Different from the first preferred embodiment, a cross-sectional area of the optical lens 20A without chamfer is not less than a cross-sectional area of the lens holder. In other words, if the optical lens 20A without chamfer is located inside the outer edge of the first chamfer portion 12A, the optical lens 20A needs to be chamfered to form a second chamfer portion 11A, wherein the first chamfer portion 12A and the second chamfer portion 11A are arranged at same position.

When the camera module 100A is installed at the corner of the frame of the electronic device, the first chamfer portion 12A and the second chamfer portion 11A correspond to the shape and position of the corner of the frame of the electronic device, so that the camera module 100A is closer to the edge of the electronic device than the existing camera module, and the screen-to-body ratio is higher.

Preferably, in order to increase the screen-to-body ratio, the second chamfer portion 11A and the first chamfer portion 12A are as close as possible to the adjacent side wall of the corner of the frame of the electronic device. Taking the optical lens 20A installed in the upper right corner of the electronic device as an example, in the second embodiment, the adjacent edge of the second chamfer portion 11A of the optical lens 20A is a straight edge, for example, the top edge and the right side edge of the second chamfer portion 11A are provided as straight edges, so as to be as close as possible to the top side wall and the right side wall of the corner of the frame of the electronic device, thereby increasing the screen-to-body ratio. Compared with the first embodiment, the optical lens 20A is less restricted as close to the corner as possible.

Correspondingly, the photosensitive element 31 is attached to the circuit board 33A deviated to the right and upper side. This causes the top area 41A and the right electrical connection area 42A to be narrower than the corner side area 43A, that is, in the second embodiment, the electronic element 35A is preferably installed on the corner side area 43A.

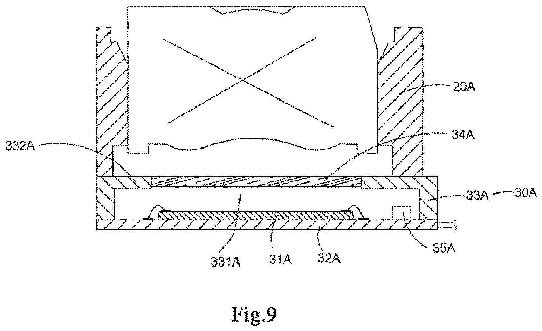

In this embodiment, the top of the lens holder 33A extends from the periphery to the center to form a supporting portion 332A, wherein the supporting portion 332A defines a light window 331A. The light-transmitting element 34A is arranged on the light window 331A, and the supporting portion 332A encapsulates the peripheral side of the light-transmitting element 34A, as shown in Fig. 9, thereby reducing the area of the light-transmitting element 34A, to prevent the light-transmitting element 34A from being too large, and to prevent the photosensitive element 31A and the light-transmitting element 34A from being damaged during the formation of the first chamfer portion 12A.

The lens holder 33A can be implemented as a molded lens holder and formed by a molding process. The supporting portion 332A is formed by placing the light-transmitting element 34A in a mold and molding it on the periphery of the light-transmitting element 34A. In this way, the light-transmitting element 34A has a small size and is protected by the lens holder 33A, so as to prevent the first chamfer portion 12A from being damaged during the formation.

In addition, an overall height of the camera module 100A is reduced, which meets the requirements of current electronic device for the lightness and miniaturization of the camera module. While meeting the full-screen, it also satisfies the miniaturization requirements.

Preferably, when the lens holder 33A is a molded lens holder, and the mold is designed to have a chamfer shape, the circuit board 32A is cut after the lens holder 33A is formed, so as to fully ensure that the position of the circuit board chamfer 121A and the lens holder chamfer 122A are compatible.

Those skilled in the art can adopt other ways to protect the light-transmitting element 34A, for example, the light-transmitting element 34A is implemented as a filter film coated on the photosensitive element 31A, and other technical solutions, which will not be repeated here.

Those skilled in the art should understand that the above description and the embodiments of the present invention shown in the accompanying drawings are only examples and do not limit the present invention. The purpose of the present invention has been completely and effectively achieved. The functions and structural principles of the present invention have been shown and explained in the embodiments. Without departing from the principles, the embodiments of the present invention may have any variation or modification.

## Claims

1. A camera module with chamfer, wherein the camera module is suitable for an electronic device, and is **characterized by** comprising:
at least one chamfer portion, suitable for being installed at a corner of the electronic device frame;
an optical lens; and
a photosensitive component, wherein the photosensitive component has a first chamfer portion, wherein the first chamfer portion is for forming the chamfer portion, wherein the photosensitive component includes a photosensitive element, a circuit board and a lens holder, wherein the photosensitive element is electrically connected to the circuit board, the lens holder supports the optical lens in a photosensitive path of the photosensitive element, wherein the lens holder has a light window providing the photosensitive element with a light path.

2. The camera module according to claim 1, wherein the circuit board and the lens holder correspondingly have a circuit board chamfer and a lens holder chamfer, wherein the circuit board chamfer and the lens holder chamfer are arranged at positions corresponding to each other, wherein the circuit board chamfer and the lens holder chamfer form the first chamfer portion.

3. The camera module according to claim 2, wherein the chamfer portion is implemented as a round chamfer, and the first chamfer portion is correspondingly implemented as a round chamfer.

4. The camera module according to claim 2, wherein the camera module has two chamfer portions, wherein the two chamfer portions are diagonally arranged at opposite corners of the camera module.

5. The camera module according to any one of claims 1 to 4, wherein the circuit board is preset with a pre-cut edge for forming the first chamfer portion.

6. The camera module according to any one of claims 1 to 4, wherein the photosensitive component further includes a light-transmitting element, wherein the lens holder includes a supporting portion, wherein top of the supporting portion extends from periphery to center to define the light window, and the supporting portion supports the light-transmitting element in the photosensitive path of the photosensitive element.

7. The camera module according to claim 5, wherein the photosensitive component further includes a light-transmitting element, wherein the lens holder includes a supporting portion, wherein top of the supporting portion extends from periphery to center to define the light window, and the supporting portion supports the light-transmitting element in the photosensitive path of the photosensitive element.

8. The camera module according to claim 6, wherein the supporting portion encapsulates peripheral sides of the light-transmitting element.

9. The camera module according to claim 7, wherein the supporting portion encapsulates peripheral sides of the light-transmitting element.

10. The camera module according to any one of claims 1 to 4, wherein the photosensitive component further includes at least one electronic element, wherein the electronic element is attached to the circuit board and is electrically connected to the circuit board.

11. The camera module according to claim 10, wherein the circuit board further has an electrical connection area, wherein the lens holder and the photosensitive element define the electrical connection area, wherein the electrical connection area has a chamfer area and an edge area, wherein the edge area and the chamfer area constitute the electrical connection area, and the electronic elements are arranged in the edge area.

12. The camera module according to claim 11, wherein the edge area has a top area, a side area and a corner area, wherein the optical lens abuts on a top side wall of the electronic device, wherein width of the top area is narrower than width of the side area and the corner area, wherein the electronic elements are installed on the side area and/or the corner area.

13. The camera module according to claim 5, wherein the photosensitive component further has a series of electronic elements, wherein the electronic elements are attached to the circuit board and electrically connected to the circuit board.

14. The camera module according to claim 13, wherein the circuit board further has an electrical connection area, wherein the lens holder and the photosensitive element define the electrical connection area, wherein the electrical connection area has a chamfer area and an edge area, wherein the edge area and the chamfer area constitute the electrical connection area, and the electronic elements are arranged in the edge area.

15. The camera module according to claim 14, wherein the edge area has a top area, a side area and a corner area, wherein the optical lens abuts on a top side wall of the electronic device, wherein width of the top area is narrower than width of the side area and the corner area, wherein the electronic elements are installed in the side area and or the corner area.

16. The camera module according to claim 8, wherein the photosensitive component further includes a series of electronic elements, wherein the electronic elements are attached to the circuit board and electrically connected to the circuit board.

17. The camera module according to claim 16, wherein the circuit board further has an electrical connection area, wherein the lens holder and the photosensitive element define the electrical connection area, wherein the electrical connection area has a chamfer area and an edge area, wherein the edge area and the chamfer area constitute the electrical connection area, and the electronic elements are arranged in the edge area.

18. The camera module according to claim 17, wherein the edge area has a top area, a side area and a corner area, wherein the optical lens abuts on a top side wall of the electronic device, wherein width of the top area is narrower than width of the side area and the corner area, wherein the electronic elements are installed in the side area and or the corner area.

19. The camera module according to any one of claims 1 to 4, wherein the optical lens has a second chamfer portion, wherein the first chamfer portion corresponds to position of the second chamfer portion for forming the chamfer portion.

20. The camera module of claim 19, wherein the edge area has a top area, a side area and a corner area, wherein the second chamfer portion abuts on two side walls of the corner of the electronic device, wherein width of the top area and the side area is narrower than width of the corner area, and the electronic elements are installed in the corner area.

21. The camera module according to claim 19, wherein two adjacent edges of the second chamfer portion are implemented as straight edges for adhering the second chamfer portion to the two side walls of the corner of the electronic device.

22. The camera module according to claim 19, wherein one of two adjacent edges of the second chamfer portion is implemented as a straight edge for making the second chamfer portion adhere to a side wall of the corner of the electronic device.

23. An electronic device, **characterized in** comprising:
a device body; and
a camera module with chamfer of claims 1-22, wherein the camera module is installed at a corner of a frame of the device body.

24. A photosensitive component, wherein the photosensitive component is suitable for a camera module with chamfer, **characterized in** comprising:
a photosensitive element;
a circuit board, wherein the photosensitive element is electrically connected and adhered to the circuit board, and the circuit board has a circuit board chamfer; and
a lens holder, wherein the lens holder has a light window that provides the photosensitive element with a light path, and a lens holder chamfer, wherein the lens holder chamfer and
the circuit board chamfer correspondingly form a first chamfer portion, which is suitable for forming a chamfer structure of the camera module, wherein the lens holder surrounds the photosensitive element and is attached to the circuit board and is suitable for supporting an optical lens of the camera module in the photosensitive path of the photosensitive element.

25. The photosensitive component according to claim 24, wherein the first chamfer portion is implemented as a round chamfer, wherein the lens holder chamfer and the circuit board chamfer are implemented as round chamfers correspondingly.

26. The photosensitive component according to claim 24 or 25, further include a light-transmitting element, wherein the light-transmitting element is arranged on the light window, and the lens holder encapsulates peripheral sides of the light-transmitting element.

27. The photosensitive component according to claim 24 or 25, further include a series of electronic elements, wherein the electronic elements are attached to the circuit board and electrically connected to the circuit board.

28. The photosensitive component of claim 27, wherein the circuit board further has an electrical connection area, wherein the lens holder and the photosensitive element define the electrical connection area, wherein the electrical connection area has a chamfer area and an edge area, wherein the edge area and the chamfer area constitute the electrical connection area, and the electronic elements are arranged in the edge area.

29. The photosensitive component of claim 28, wherein the edge area has a top area, a side area, and a corner area, wherein width of the top area is narrower than width of the side area and the corner area, wherein the electronic elements are installed on the side area and/or the corner area.

30. The camera module according to claim 28, wherein the edge area has a top area, a side area and a corner area, wherein width of the top area and the side area is narrower than width of the corner area, wherein the electronic elements are installed in the corner area.
